(19) Europäisches Patentamt
European Patent Office
Office européen des brevets

(11) Publication number: 0 052 464
B1

(12) # EUROPEAN PATENT SPECIFICATION

(45) Date of publication of patent specification: **19.02.86**

(51) Int. Cl.⁴: **C 08 F 210/16,** C 08 F 4/64, C 08 F 4/02

(21) Application number: **81305245.3**

(22) Date of filing: **04.11.81**

(54) **A process for preparing ethylene copolymers.**

(30) Priority: **05.11.80 JP 154611/80**

(43) Date of publication of application: **26.05.82 Bulletin 82/21**

(45) Publication of the grant of the patent: **19.02.86 Bulletin 86/08**

(84) Designated Contracting States: **AT DE FR GB IT NL**

(56) References cited:
**EP-A-0 007 647**
**DE-A-2 461 677**
**FR-A-2 378 804**
**GB-A-1 355 245**
**GB-A-2 014 592**

(73) Proprietor: **MITSUI PETROCHEMICAL INDUSTRIES, LTD.**
**2-5, Kasumigaseki 3-chome Chiyoda-ku**
**Tokyo 100 (JP)**

(72) Inventor: **Toyota, Akinori**
**103-21, Minamiiwakuni-machi, 2-chome**
**Iwakuni-shi Yamaguchi-ken (JP)**
Inventor: **Minami, Syuji**
**2-5, Misono 1-chome**
**Ohtake-shi Hiroshima-ken (JP)**
Inventor: **Kashiwa, Norio**
**55-18, Midoro-cho 2-chome**
**Iwakuni-shi Yamaguchi-ken (JP)**

(74) Representative: **Myerscough, Philip Boyd et al**
**J.A.Kemp & Co. 14, South Square Gray's Inn**
**London, WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 052 464 B1

Courier Press, Leamington Spa, England.

**Description**

This invention relates to a process for preparing a copolymer of a predominant amount of ethylene and a minor amount of an α-olefin containing at least three carbons. More particularly, the invention relates to a process for preparing ethylene copolymers, by which low-density ethylene copolymers having densities not higher than 0.945 g/cm$^3$, for example, can be produced with industrial advantage, assisted by excellent activity and effectiveness of the catalyst, without the need of pre-polymerization treatment of the titanium-containing catalyst component.

EP—A—7647 discloses the preparation of low density copolymers of ethylene with $C_4$ to $C_{10}$ olefins by gas phase polymerisation in the presence of a catalyst comprising (A) an aluminum alkyl compound and (B) a titanium-containing component formed by reacting a titanium alcoholate with an adduct formed between a magnesium halide and a organoaluminum dihalide.

It is known to polymerize or copolymerize ethylene, in the presence of a catalyst composed of a solid titanium composition (a) containing at least magnesium, titanium and halogen and optionally containing an electron donor, used as the titanium-containing catalyst component [A], and an organoaluminum compound catalyst component [B] (e.g. US—A—3,888,835, US—A—3,644,318, GB—A—1,275,641 and DE—A—2,365,235).

Generally in case of producing high-density ethylene polymers or copolymers through slurry polymerization in an inert solvent, the products having high bulk densities can be obtained in high yields (the yields of solid polymers to the consumed ethylene). In the attempts to prepare low-density ethylene copolymers, such as those having the density of not higher than 0.945 g/cm$^3$, by the copolymerization of a predominant amount of ethylene with a minor amount of an α-olefin having at least 3 carbon atoms, various troubles take place, and frequently satisfactory results could not be obtained. For example, copolymers having sufficiently high bulk density are hardly obtained; an innegligible amount of the inert solvent-soluble copolymer is formed to reduce the yield of solid copolymer to the consumed ethylene; and low-density copolymers are hardly formed due to low copolymerizability of α-olefins. Thus, solving of those troubles became an important technical problem.

With the view to improve such troubles and to perform the slurry polymerization smoothly, it has been proposed to add a prepolymerization step, that is, a minor amount of ethylene or α-olefin is prepolymerized at relatively low temperatures in the presence of a catalyst composed of the solid titanium composition (a) serving as the titanium catalyst component, in combination with an organoaluminum catalyst component [B], and the resulting prepolymerization-treated titanium catalyst component is used to form a catalyst system in combination with the organoaluminum compound-containing catalyst component [B]. This catalyst system then is used in the intended polymerization or copolymerization, performed at higher temperatures. (Such a practice is known from, for example, US—A—4,128,607 and US—A—4,190,614.)

We have engaged in the research works, aiming at the development of a process for producing the desired low density ethylene copolymers without the additional pre-polymerization treatment as described above, yet overcoming the various troubles occurring in the copolymerization of a predominant amount of ethylene with a minor amount of an α-olefin having at least three carbon atoms.

As a result, we discovered that it is possible to produce, with industrial advantage, low-density ethylene copolymers without the aforesaid problems, with excellent catalytic effectiveness or activity, and without the step of subjecting a solid titanium composition (a) to a prepolymerization treatment, by using in the copolymerization of a predominant amount of ethylene with a minor amount of an α-olefin having at least 3 carbon atoms, a non-prepolymerization treated titanium-containing catalyst component [A], obtained by treating a solid titanium composition (a) containing at least magnesium, titanium and halogen and optionally containing less than 2 mols of an electron donor per gram-atom of titanium atom (that is, containing from zero to less than 2 mols of an electron donor) with 0.1 to 10 mols, per gram-atom of titanium atom in said composition (a), of an organoaluminum compound (b), the halogen/aluminum (atomic ratio) in said compound (b) being not more than 1, preferably not more than 0.5, in combination with an organoaluminum compound catalyst component [B].

The titanium composition (a) serving as the starting material of the titanium catalyst component [A] is a solid compound containing at least magnesium, titanium and halogen, which optionally contains less than 2 mols per gram-atom of titanium of an electron donor. Such titanium composition (a) contains magnesium halide of lower degree of crystallinity than that of commercial magnesium halide, and normally has a specific surface area of at least 3 m$^2$/g, preferably 10 to 1000 m$^2$/g, particularly 40 to 800 m$^2$/g. Its composition undergoes substantially no change when washed with hexane at room temperature. In said titanium composition (a), titanium is normally tetravalent, the halogen/titanium (atomic ratio) ranges from 5 to 200, preferably from 5 to 100, and the magnesium/titanium (atomic ratio) ranges from 2 to 100, preferably from 4 to 50. The titanium composition (a) preferably contains a small amount of an electron donor, such as 0.05 to less than 2 mols, preferably 0.1 to less than 2 mols, per gram-atom of titanium.

Said composition (a) may also contain other metals, elements, functional groups and the like. Particularly the composition (a) containing alkoxyl (or aryloxyl) group at the ratio of, for example, 0.05 to 4 equivalents per gram-atom of titanium is preferred. When such a composition (a) is used, the improving effect of this invention often becomes all the more conspicuous.

The composition (a) preferably has the average particle diameters ranging from 1 to 100 μm, preferably with a narrow particle size distribution.

Such a titanium composition (a) can be obtained, for example, by mutually contacting a magnesium compound or magnesium metal with a titanium compound, and further with an electron donor, if desired. Other reaction reagent, such as a compound of silicon aluminum or the like may also be employed as occasion demands.

Methods for producing such titanium composition (a) are known, and useful for the present invention. As the typical examples of such methods, those disclosed in the following literature may be named: JP—A—32270/75 (corresponding to US—A—4,071,674), JP—A—20297/76 (corresponding to US—A—4,157,435), JP—A—28189/76 (corresponding to US—A—4,076,924), JP—A—64586/76, JP—A—92885/76 (corresponding to US—A—4,085,276), JP—A—136625/76, JP—A—87489/77 (corresponding to US—A—4,250,285), JP—A—100596/77, JP—A—147680/77 (corresponding to DE—A—2,724,971), JP—A—104593/77 (corresponding to US—A—4,143,223), JP—A—40093/78 (corresponding to GB—A—1,554,248), JP—A—1351002/80 and JP—A—1351003/80 (both corresponding to EP—A—0018737), JP—A 811/81 (corresponding to DE—A—3,022,738), and JP—A—11908/81 (corresponding to EP—A—22376), JP—B—46799/78, and JP—B—32270/75 (corresponding to US—A—4,071,674), US—A—4,069,169 and US—A—4,115,319.

Some methods of forming titanium composition (a) will be briefly described hereinbelow.

(1) A solid described in the following (i) to (iii) is reacted with a titanium compound which is liquid under the reaction conditions;

(i) a magnesium compound or a complex of the magnesium compound and an electron donor.
(ii) a solid product obtained by pulverizing a magnesium compound or a complex of the magnesium compound and an electron donor in the presence or absence of an electron donor and/or a pulverization aid.
(iii) a solid product obtained by treating a solid of above (i) or (ii) with a compound such as an electron donor, an organoaluminum compound, a halogen-containing silicon compound and a mixture thereof.

(2) A magnesium compound in the liquid state having no reducing ability is reacted with a titanium compound in the liquid state in the optional presence of an electron donor, to cause precipitation of a solid titanium composition.

(3) The product of (2) above is further reacted with a titanium compound.

(4) The product of (1) or (2) is reacted with an electron donor and a titanium compound.

(5) The product of any one of (1) to (4) is treated with halogen or a halogen compound.

In the foregoing embodiments (1) through (4) above, either a halogen-containing compound is used as at least one of the reactants or reagent and/or the halogenation treatment in (5) above is performed.

Examples of the magnesium compounds useful for the preparation of such a solid titanium composition (a) include: magnesium oxide, magnesium hydroxide, hydrotalcite, magnesium carboxylates, alkoxymagnesium, aryloxymagnesiums, alkoxymagnesium halides, aryloxymagnesium halides, magnesium dihalides, organomagnesium compounds and the magnesium compounds obtained by treating the organomagnesium compounds with an electron donor, halosilane, alkoxysilane, silanol, aluminum compound and other organic or inorganic halogen compounds. In above compounds, an alkoxyl group has preferably 1 to 20 carbon atoms, more preferably 1 to 12 carbon atoms, and an aryloxyl group has preferably 6 to 20 carbon atoms, more preferably 6 to 12 carbon atoms.

In the preparation of the titanium composition (a), for example, the organoaluminum compound which may be used in the embodiment (1) above can be suitably selected from the later described organoaluminum compound catalyst component [B].

Furthermore, as the halogen-containing silicone compound which may be used for preparing the titanium composition (a) according to the embodiment (1) above, for example, silicone tetrahalides, silicon alkoxyhalides, silicon alkylhalides and halopolysiloxanes may be named.

Examples of the titanium compounds useful for preparing the titanium composition (a) include: titanium tetrahalides, alkoxytitanium halides, aryloxytitanium halides, alkoxytitaniums and aryloxy-titaniums. Of those, titanium tetrahalide, particularly titanium tetrachloride, is preferred. In above examples, an alkyl group has preferably 1 to 20 carbon atoms, more preferably 1 to 8 carbon atoms, an alkoxyl group has preferably 1 to 20 carbon atoms, more preferably 1 to 12 carbon atoms, and an aryloxyl group has preferably 6 to 20 carbon atoms, more preferably 6 to 12 carbon atoms.

Also the examples of electron donors useful for preparing the titanium composition (a) include: oxygen-containing electron donors such as alcohols, phenols, ketones, aldehydes, carboxylic acids, esters of organic acids inorganic acids, ethers, acid amides and acid anhydrides; and nitrogen-containing electron donors such as ammonia, aminies, nitriles and isocyanates.

More specifically, for example, $C_1$—$C_{18}$ alcohols such as methanol, ethanol, propanol, pentanol, hexanol, octanol, dodecanol, octadecyl alcohol, benzyl alcohol, phenylethyl alcohol, cumyl alcohol and isopropylbenzyl alcohol; $C_6$—$C_{25}$ phenols which may contain alkyl groups, such as phenol, cresol, xylenol, ethyl phenol, propyl phenol, cumyl phenol, nonyl phenol and naphthol; $C_3$—$C_{15}$ ketones such as acetone, methyl ethyl ketone, methyl isobutyl ketone, acetophenone and benzophenone; $C_2$—$C_{15}$ aldehydes such as

acetaldehyde, propionaldehyde, octylaldehyde, benzaldehyde, tolualdehyde and naphthaldehyde; $C_2$—$C_{20}$ organic acid esters such as methyl formate, methyl acetate, ethyl acetate, vinyl acetate, propyl acetate, octyl acetate, cyclohexyl acetate, ethyl propionate, methyl butyrate, ethyl valerate, ethyl stearate, methyl chloroacetate, ethyl dichloroacetate, methyl methacrylate, ethyl crotonate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluate, ethyl toluate, amyl toluate, ethyl ethylbenzoate, methyl anisate, ethyl anisate, ethyl ethoxybenzoate, diethyl phthalate, dibutyl phthalate, dioctyl phthalate, γ-butyrolactone, δ-valerolactone, cumarine, phthalide and ethylene carbonate; inorganic acid esters such as ethyl silicate, butyl silicate and vinyl ethoxysilane; $C_2$—$C_{15}$ acid halides such as acetyl chloride, benzoyl chloride, toluic acid chloride and anisic acid chloride; $C_2$—$C_{20}$ ethers such as methyl ether, ethyl ether, isopropyl ether, butyl ether, amyl ether, tetrahydrofuran, anisole and diphenyl ether; $C_2$—$C_{15}$ acid amides such as acetic amide, benzoic amide and toluic amide; $C_1$—$C_{25}$ amines such as methylamine, ethylamine, diethylamine, tributylamine, piperidine, tribenzylamine, aniline, pyridine, picoline and tetramethylethylenediamine; and $C_2$—$C_{10}$ nitriles such as acetonitrile, benzonitrile and tolunitrile, may be exemplified. More than one of those electron donors may be used concurrently. Again they may be used in complex form with aluminum halide or other compounds.

As the halogen atoms constituting the titanium composition, fluorine, chlorine, bromine, iodine or their mixtures may be named. Of those, chlorine is particularly preferred.

The electron donors, of which presence in the titanium composition (a) are desirable, are those not containing active hydrogen, such as esters of organic or inorganic acids, ethers, ketones, tertiary amines, acid halides and acid anhydrides. Particularly the esters of organic or inorganic acids and ethers are preferred, the most preferred being aromatic carboxylic acid ester and alkyl-containing ethers. Typical examples of preferred aromatic carboxylic acid esters include those containing 8 to 18 carbon atoms, particularly the lower alkyl esters of benzoic acid, lower alkylbenzoic acid and lower alkoxybenzoic acid. Here the term 'lower' denotes the carbon number of 1 to 4, preferably 1 to 2. Also the preferred alkyl group-containing ethers are those containing 4 to 20 carbon atoms, such as diisoamyl ether and dibutyl ether.

As already mentioned, according to the invention conspicuous effect is frequently obtained when the titanium composition (a) containing alkoxyl groups (or aryloxyl groups) is used. Such preferred compositions (a) can be prepared by using the alcohols (or phenols) as above exemplified, in the course of their production.

According to the present invention, the titanium composition (a) as above-described is treated with an organoaluminum compound (b), and the resulting product is used as the titanium catalyst component [A]. In that procedure, the type and the amount of the organoaluminum compound (b) used in the treatment are important.

As the organoaluminum compound (b), those in which the halogen/aluminum (atomic ratio) in the average composition is no more than 1 are necessarily used. It is preferred that the said atomic ratio should be not more than 0.5, most preferably, zero. Specific examples of such organoaluminum compound (b) include: trialkylaluminum, the alkyl group thereof preferably containing 1—8 carbon atoms, such as triethylaluminum, triisobutylaluminum, trihexylaluminum and trioctylaluminum; dialkylaluminum halides of which the alkyl group preferably containing 1—4 carbon atoms, such as diethylaluminum chloride, diisobutylaluminum chloride and diethylaluminum bromide; dialkylaluminum hydride of which the alkyl group preferably having 1—4 carbon atoms, such as diethylaluminum hydride; and the mixtures of the foregoing. Such organoaluminum compounds may also be obtained through reactions of organomagnesium compounds or organolithium compounds with halogen-containing aluminum compounds.

Of the above-named, trialkylaluminum or mixtures thereof with not more than an equivalent amount of dialkylaluminum halide are preferred, as their use occasionally achieves the further improvement in not only the bulk density of the copolymers but also in the catalytic activity or in the copolymer yield. If dialkylaluminum halide alone is used, the bulk density may be improved, in certain cases at the cost of the catalytic activity or copolymer yield to a certain extent. In contrast thereto, when an organoaluminum compound containing a large volume of halogen atom, such as alkylaluminum sesquihalides or alkylaluminum dihalides is used, substantially no bulk density-improving effect is observed, and furthermore remarkable reduction in the catalytic activity or copolymer yield takes place. Hence, use of such organoaluminum compound should be avoided.

The amount of the organoaluminum compound (b) to be used in the treatment is, per one titanium atom in the titanium composition (a), 0.1 to 10 mols, preferably about 0.5 to about 5 mols. If its amount is less than the above lower limit, a sufficient improving effect cannot be obtained. On the other hand, if it is more than the above upper limit, heavy reduction in the catalytic activity or in the performance of formed copolymer takes place.

If the organoaluminum compound (b) is replaced with organometallic compounds of other metals, for example, organomagnesium compound alone, the effect of this invention cannot be obtained.

The treatment of the titanium composition (a) with the above-described organoaluminum compound (b) is performed, for example, in a liquid inert hydrocarbon solvent, preferably at the temperature not higher than about 90°C., particularly from about −40°C to about 70°C., for preferably from about 5 seconds to about 10 hours, particularly from about 10 seconds to about 5 hours. Examples of the liquid inert

solvents used for this purpose include: aliphatic hydrocarbons such as n-pentane, iso-pentane, n-hexane, iso-hexane, n-heptane, n-octane, iso-octane, n-decane, n-dodecane, kerosene and liquid paraffin; alicyclic hydrocarbons such as cyclopentane, methylcyclopentane, cyclohexane and methylcyclohexane; aromatic hydrocarbons such as benzene, toluene, xylene and cymene; and mixtures of the foregoing.

The concentration of the titanium composition (a) in the inert solvent in said treatment should preferably be about 0.01 to about 500 mmols/liter, calculated as titanium atom, more preferably from about 0.1 to about 200 mmols/liter. It should be noted that in this treatment, concurrent presence of free titanium compound or polymerizable olefin should be avoided.

In thus obtained titanium catalyst component [A] of this invention, the constituting ratio of magnesium, titanium and halogen is substantially the same as that in the starting titanium composition (a). If an electron donor is present in the titanium composition, normally the amount of the electron donor is somewhat reduced, and addition of the aluminum compound and partial or total reduction of titanium are observed.

According to the invention, an organoaluminum compound catalyst component [B] is used together with the titanium-containing catalyst component [A], to assist the copolymerization of a predominant amount of ethylene with a minor amount of an α-olefin having at least 3 carbon atoms.

As such organoaluminum compound catalyst component [B], the compound containing in its molecule at least one Al-C bond can be utilized. For example, (i) organoaluminum compounds of the formula, $R^1mAl(OR^2)_nH_pX_q$ (wherein $R^1$ and $R^2$ denote hydrocarbon groups normally containing 1 to 15 carbon atoms, preferably 1 to 4 carbon atoms, and may be same or different, examples of such hydrocarbon groups including alkyl, alkenyl, and aryl; X stands for a halogen atom, m is a number of $0<m\leqq3$, n is a number of $0\leqq n<3$, p is a number of $0\leqq p<3$, q is a number of $0\leqq q<3$, and m+n+p+q equals 3): (ii) and alkyl metal complex of a metal of Group I of the periodic table with aluminum, expressed by the formula, $M^1AlR^1_4$ (in which $M^1$ stands for Li, Na or K, and $R^1$ are the same as defined above) may be used.

As the organoaluminum compounds belonging to the group (i) above, the following may be named: those expressed by the formula $R^1mAl(OR^2)_{3-m}$ (in which $R^1$ and $R^2$ are the same as defined above, and m is preferably a number of $1.5\leqq m<3$); those expressed by the formula, $R^1mAlX_{3-m}$ (in which $R^1$ is the same as defined above, X is a halogen atom, and m is preferably a number of $0<m<3$); those expressed by the formula, $R^1mAlH_{3-m}$ (in which $R^1$ is the same as defined above, and m is preferably a number of $2\leqq m<3$); and those expressed by the formula, $R^1mAl(OR^2)_nXq$ (in which $R^1$ and $R^2$ are the same as defined above, X is a halogen atom, $0<m\leqq3$, $0\leqq n<3$, $0\leqq q<3$, and m+n+q equals 3).

Specific examples of the aluminum compounds belonging to group (i) include: trialkylaluminums such as triethylaluminum, tributylaluminum and trihexylaluminum; trialkenylaluminums such as tri-isoprenylaluminum; dialkylaluminum alkoxides such as diethylaluminum ethoxide and dibutylaluminum butoxide; alkylaluminum sesquialkoxide such as ethylaluminum sesquiethoxide and butylaluminum sesquibutoxide; partially alkoxylated alkylaluminums such as a compound having an average composition expressed as $R^1_{2.5}Al(OR^2)_{0.5}$ (in which $R^1$ and $R^2$ are the same as defined above); dialkylaluminum halide such as diethylaluminum chloride, dibutylaluminum chloride and diethylaluminum bromide; alkylaluminum sesquihalide such as ethylaluminum sesquichloride, butylaluminum sesquichloride and ethylaluminum sesquibromide; alkylaluminum dihalide such as ethylaluminum dichloride, propylaluminum dichloride and butylaluminum dibromide; dialkylaluminum hydride such as diethylaluminum hydride and dibutylaluminum hydride; alkylaluminum dihydride such as ethylaluminum dihydride and propylaluminum dihydride; and alkylaluminum alkoxyhalide such as ethylaluminum ethoxychloride, butylaluminum butoxychloride and ethylaluminum ethoxybromide.

Also as the compounds analogous to those of group (i) above, such organoaluminum compounds in which more than one aluminum atoms are bonded through oxygen or nitrogen may be used, examples thereof including:

$$(C_2H_5)_2AlOAl(C_2H_5)_2,$$

$$(C_4H_9)_2AlOAl(C_4H_9)_2,$$

and

$$(C_2H_5)_2Al\underset{\displaystyle C_6H_5}{\underset{|}{N}}Al(C_2H_5)_2.$$

Specific examples of the compounds belonging to the group (ii) include $LiAl(C_2H_5)_4$ and $LiAl(C_7H_{15})_4$.

Of those organoaluminum-containing catalyst component [B], trialkylaluminums or mixtures of trialkylaluminums and alkylaluminum halides are preferred.

In practicing the subject process, the polymerization system may contain, besides the catalyst components [A] and [B], an electron donating component and various halogen compounds such as hydrocarbon halide, silicone halide, aluminum halide and the like.

According to the present invention predominant amount of ethylene and minor amount of and olefin

having at least 3 carbon atoms are copolymerized. Whereupon copolymers having the ethylene content of at least about 88 mol%, preferably, at least 90 mol%, can be produced. As the ratio (molar ratio) of ethylene/α-olefin having at least 3 carbon atoms in the copolymerization system, for example, at least 80/20, preferably 85/15, more preferably 88/12, may be employed. Other compounds such as diene, triene and the like may be concurrently present in the copolymerization system.

As the α-olefins having at least 3 carbon atoms to be copolymerized with ethylene, the following may be preferred: α-olefins of $C_3$—$C_{15}$, such as propylene, 1-butene, 1-pentene, 1-hexene, 1-octene, 1-decene, 4-methyl-1-pentene, 3-methyl-1-pentene and 4,4-dimethyl-1-pentene.

The process of this invention can be advantageously applied particularly to the preparation of low-density copolymers, for example, the ethylene copolymers having the density not more than 0.945 g/cm$^3$, especially from 0.900 to 0.945 g/cm$^3$.

The polymerization can be performed at liquid or vapor phase. In case of liquid phase polymerization, an inert solvent such as butane, pentane, hexane, heptane, kerosene, toluene or the like may be used as the reaction medium, or the α-olefin itself may be utilized as the reaction medium. In the polymerization, the titanium catalyst component [A] may be isolated from the mixture resulting from the treatment of the titanium composition (a) with an organoaluminum compound (b) before the use, but normally such isolation is unnecessary. Use of the mixture as it is as the component [A] is operationally advantageous. The amount of the titanium-containing catalyst component [A] is normally from about 0.001 to about 1 millimol, calculated as titanium atom, particularly from about 0.005 to about 0.5 millimol, per liter of the reaction volume. Incidentally, the 'reaction volume' denotes the volume of the liquid phase in case of liquid-phase polymerization, and the volume of polymerization zone in case of vapor-phase polymerization.

Even when the titanium catalyst component [A] is the aforesaid mixture resulting from the treatment of the titanium composition (a) with an organoaluminum compound (b) and does still contain the residual organoaluminum compound (b), it is nevertheless necessary to add the organoaluminum catalyst component [B]. It is used preferably at such a ratio that the organoaluminum compound component in the reaction system should become at least about 11 more preferably at least about 15 to about 2000, in terms of Al/Ti (atomic ratio).

The component [A] is supplied to the polymerization system, either separately from the component [B] or as preliminarily mixed with a part or whole of the component [B], in both cases without any preceding preliminary contact with ethylene and/or the α-olefin. When it is preliminarily mixed with the whole or part of the component [B], if Al/Ti (atomic ratio) in the mixture exceeds 10, it is preferred that the preliminary mixture should be used for the copolymerization as soon as possible.

The copolymerization temperature should be not higher than the melting point of the copolymer, preferably from about 50° to about 120°C., more preferably from about 60°C to about 110°C. The copolymerization pressure may range from the atmospheric pressure to 9.8 MPa (100 kg/cm$^2$), particularly from 0.1 to 5.9 MPa (1 to 60 kg/cm$^2$) the stated pressures being gauge pressures. The copolymerization is practicable batchwise, semi-continuously or continuously. The continuous operation is industrially advantageous.

It is also possible to perform the copolymerization in more than one stage under different reaction conditions. The molecular weight of the copolymer can be suitably controlled by the addition of hydrogen.

Hereinafter the present invention will be explained more specifically, as to several embodiments for practicing the subject process, as demonstrated by Examples.

Example 1

(Preparation of Ti composition (a))

A 2l-glass flask was charged with 4.76 g of anhydrous magnesium dichloride, 25 ml of n-decane and 18.3 ml of 2-ethyl hexanol under nitrogen atmosphere, and the mixture was heated at 130°C. for 2 hours to form a homogeneous solution. To the solution 0.84 ml of ethyl benzoate was added. The homogeneous solution was then dropwisely added into 200 ml of titanium tetrachloride which had been cooled to 0°C, under stirring, over 20 minutes. Then the temperature of the system was gradually raised to 80°C., and at said temperature 1.39 ml of ethyl benzoate was added. The stirring was continued for additional 2 hours at 80°C. Thus formed solid was recovered by filtration, suspended again in 200 ml of titanium tetrachloride, and the suspension was maintained at 90°C. for 2 hours. The solid reaction product was recovered by filtration, and thoroughly washed with refined hexane until free titanium compounds became no longer detectable in the washing. This titanium composition (a) contained 3.4% by weight of titanium, 20.0 wt% of magnesium, 59.0% by weight of chlorine, 16.6 wt% of ethyl benzoate and 0.7% by weight of 2-ethylhexyl alcohol radical. The composition was spherical, having an average particle diameter of 5 μm. The uniformity coefficient of the composition was 1.34.

The composition had a specific surface area of 216 m$^2$/g. In the X-ray diffraction analysis thereof, all the maximum peak breadth of magnesium dichloride were broad.

[Treatment of the Ti composition (a) with an aluminum compound]

Into a thoroughly purified n-decane (50 ml), the above Ti composition (a) of the amount corresponding to 0.5 mg-atom calculated as Ti atom was added, followed by the addition of 1.5 mmols of

triethylaluminum at 20°C. Thereafter the system was stirred for 120 minutes, and used for the copolymerization as it was.

[Copolymerization]

Dehydrated and refined hexane solvent (1 liter) was fed into a 2-liter capacity autoclave. After thoroughly nitrogen-substituting the atmosphere in the autoclave, 2.25 mmols of triethylaluminum, and successive 0.04 MPa (0.4 kg/cm$^2$) of hydrogen, were supplied into the autoclave. Then ethylene containing 6.19% by mole of 1-butene was fed in the amount as would make the total pressure at 70°C. 0.25 MPa (2.5 kg/cm$^2$). Subsequently 0.015 mg-atom, calculated as Ti atom, of the above-prepared Ti-containing catalyst component [A] was added. The copolymerization was performed for 2 hours at 70°C, continuously feeding the ethylene-1-butene mixed gas of the specified composition so as to maintain the total pressure of 0.25 MPa (2.5 kg/cm$^2$). Whereupon 3.01 g of an ethylene copolymer powder having a bulk density of 0.39 g/ml and a melt index (MI) of 0.92 dg/min was obtained. The copolymer had a density of 0.926 g/cm$^3$, and the polymer dissolved in the hexane solvent amounted 2.5 wt%.

Examples 2—11

The Ti composition (a) prepared in Example 1 was treated with an organoaluminum compound shown in Table I and used for the copolymerization under the varied conditions as set forth in Table I below. All other procedures were same to those described in Example 1. The results were as shown in Table I.

TABLE I

| Ex. No. | Amount of Ti (mg-atom) | Treating conditions with organoaluminum-treatment: Organoaluminum compound (b) Type | Organoaluminum compound (b) Amount (mmol) | Solvent | Temp. (°C) | Time (min.) | Copolymerization conditions of ethylene and α-olefin: Organoaluminum compound [B] Type | Organoaluminum compound [B] Amount (mmol) | Amount of [A] Ti-containing catalyst component (mg-atom) | $H_2$ partial pressure ($kg/cm^2$) MPa | Polymerization pressure ($kg/cm^2$) MPa |
|---|---|---|---|---|---|---|---|---|---|---|---|
| Ex. 2 | 0.5 | triisobutyl-aluminum | 0.5 | hexane | 25 | 30 | $AlEt_3$ | 2.25 | 0.015 | 0.05 (0.5) | (2.5) 0.25 |
| Ex. 3 | 0.1 | trihexyl-aluminum | 0.5 | n-decane | 10 | 120 | " | " | " | 0.07 (0.7) | (3.0) 0.29 |
| Ex. 4 | 0.5 | $Et_2AlH$ | 1.0 | n-heptane | 0 | 120 | " | " | " | 0.16 (1.6) | (4.0) 0.39 |
| Ex. 5 | " | $AlEt_{2.6}Cl_{0.4}$ | 1.5 | n-pentane | 20 | 60 | " | " | " | 0.04 (0.4) | (2.5) 0.25 |
| Ex. 6 | 0.1 | $AlEt_2Cl$ | 0.3 | hexane | 20 | 5 | " | " | " | 0.05 (0.5) | " " |
| Ex. 7 | 0.1 | triisobutyl-aluminum | 0.3 | n-heptane | " | 60 | triisobutyl-aluminum | " | " | 0.05 (0.5) | " " |
| Ex. 8 | 0.5 | $AlEt_3$ | 1.5 | hexane | " | " | $AlEt_3$ | " | " | " | " " |
| Ex. 9 | " | triisobutyl-aluminum | " | " | " | " | trihexyl-aluminum | " | " | 0.07 (0.7) | (3.0) 0.29 |
| Ex. 10 | " | " | " | " | " | " | triisobutyl-aluminum | " | " | " | " " |
| Ex. 11 | " | $AlEt_3$ | " | " | " | " | $AlEt_3$ | " | " | | |

TABLE I (continued)

| Ex. No. | Copolymerization conditions of ethylene and α-olefin | | | Results of copolymerization | | | | |
|---|---|---|---|---|---|---|---|---|
| | | | | Copolymer powder | | | | |
| | Polymerization temp. (°C) | α-olefin | Fees ratio of α-olefin (mol %) | Yield (g) | Bulk density (g/ml) | MI (dg/min) | Density ($g/cm^3$) | Amount of dissolved polymer (wt.%) |
| Ex. 2 | 65 | 1-butene | 6.31 | 328 | 0.36 | 1.2 | 0.926 | 3.8 |
| Ex. 3 | " | " | 6.64 | 335 | 0.44 | 1.7 | 0.927 | 1.9 |
| Ex. 4 | " | " | 4.42 | 293 | 0.34 | 8.9 | 0.939 | 2.0 |
| Ex. 5 | " | " | 6.11 | 292 | 0.38 | 2.0 | 0.926 | 5.0 |
| Ex. 6 | " | " | 6.22 | 365 | 0.41 | 1.1 | 0.925 | 5.1 |
| Ex. 7 | " | " | 5.42 | 283 | 0.40 | 1.1 | 0.929 | 3.0 |
| Ex. 8 | " | propylene | 8.12 | 336 | 0.44 | 2.1 | 0.928 | 4.4 |
| Ex. 9 | 60 | 1-hexene | 7.23 | 325 | 0.38 | 1.2 | 0.930 | 4.9 |
| Ex. 10 | " | 4-methyl-pentene | " | 331 | 0.38 | 0.8 | 0.931 | 4.6 |
| Ex. 11 | " | 1-decene | 8.61 | 276 | 0.38 | 1.0 | 0.933 | 4.1 |

Example 12

Preparation of Ti catalyst component [A]:

(I) [Preparation of Ti composition (a)]

Into 0.1 mol of commercial n-butylmagnesium chloride (n-butyl ether solvent), 0.11 mol of tetraethoxysilane was added dropwise in nitrogen atmosphere at room temperature, followed by an stirring for one hour at 60°C. Thus formed solid was recovered by filtration, and washed thoroughly with hexane. The solid was then suspended in 30 ml of kerosene, and into which 0.02 mol of isoamyl benzoate was added dropwise, followed by stirring for one hour at 60°C. After cooling the system, 200 ml of $TiCl_4$ was added to the system, followed by 2 hours' stirring at 100°C. The supernatant portion was removed by decantation, and further 200 ml of $TiCl_4$ was added to the remaining solid portion, followed by an hour's treatment at 100°C. Thus formed solid was hot-filtered, and washed thoroughly with hot kerosene and hexane. The resulting Ti composition (a) contained, calculated as atoms, 2.4% by weight of Ti, 62.0 wt% of Cl, 21.0 wt% of Mg, 1.6% by weight of ethoxy group and 8.7% by weight of isoamyl benzoate. The average particle diameter was 12 µm, and the uniformity coefficient was 2.7. The catalyst was granular, having a surface area of 203 $m^2/g$. Upon X-ray diffraction analysis thereof, broad peaks of $MgCl_2$ were observed.

(II) Treatment with an organoaluminum compound

Three (3) mg-atom of the above Ti composition (a), calculated as titanium atom, was suspended in 50 ml of n-decane. To the suspension 10 mmols of triethyl-aluminum was added at 20°C., followed by stirring for 30 minutes.

[Copolymerization]

The copolymerization was performed under the conditions as shown in Table II. The results were as shown in Table II.

Examples 13—18

In the preparation of the Ti-containing catalyst component [A], the type and amount of the electron donor was varied for each run as shown in Table II. The treatment with an organoaluminum compound was performed under the same conditions as employed in Example 12, and the copolymerization was performed under the conditions as given in Table II. The results were shown in Table II.

Control 1

Example 1 was repeated except that the treatment of the Ti composition (a) with an organoaluminum compound was omitted. The results were as shown in Table II, by way of Control 1.

Controls 2 and 3

Example was repeated except that the amount of an organoaluminum compound in the treatment with an organoaluminum compound was increased to 10 mmols. The results are given as those of Control 2. Again the results of the run in which the organoaluminum compound used for the Treatment was changed from $AlEt_3$ to $AlEt_{1.5}Cl_{1.5}$ are given in Table II, by way of Control 3.

TABLE II

| No. | Ti-containing catalyst component [A] | | | | | | | | | | Copolymerization conditions* | |
|---|---|---|---|---|---|---|---|---|---|---|---|---|
| | Electron donor | | Composition | | | | | Surface area ($m^2/g$) | Average particle diameter (μm) | Uniformity coefficient | $H_2$ partial pressure ($kg/cm^2$) MPa | Polymerization pressure ($kg/cm^2$) MPa |
| | Type | Amount | Ti (wt%) | Cl (wt%) | Mg (wt%) | OEt (wt%) | Ester (wt%) | | | | | |
| Ex. 12 | isoamyl benzoate | 0.02 | 2.4 | 62.0 | 21.0 | 1.6 | 8.7 | 203 | 12 | 2.7 | 0.07 0.7 | 0.34 (3.5) |
| Ex. 13 | n-butyl benzoate | 〃 | 2.5 | 63.0 | 22.0 | 3.1 | 8.9 | 195 | 〃 | 2.7 | 0.1 1.0 | 〃 〃 |
| Ex. 14 | octyl benzoate | 0.025 | 2.9 | 63.0 | 21.0 | 4.1 | 9.6 | 190 | 〃 | 2.8 | 0.06 0.6 | 0.29 (3.0) |
| Ex. 15 | ethyl anisate | 0.017 | 2.2 | 63.0 | 22.0 | 2.9 | 9.8 | 180 | 13 | 2.9 | 0.09 0.9 | 〃 〃 |
| Ex. 16 | ethyl toluate | 〃 | 2.2 | 57.0 | 21.0 | 4.1 | 9.8 | 236 | 12 | 2.6 | 0.08 0.8 | 〃 〃 |
| Ex. 17 | ethyl butyrate | 0.03 | 2.3 | 63.0 | 22.0 | 4.3 | 5.7 | 230 | 13 | 2.8 | 0.07 0.7 | 0.25 (2.5) |
| Ex. 18 | ethyl cyclohexyl-carboxylate | 0.03 | 2.1 | 64.0 | 23.0 | 3.8 | 6.1 | 197 | 13 | 〃 | 0.05 0.5 | 〃 〃 |
| Comp. Ex. 1 | — | — | — | — | — | — | — | — | — | — | 0.07 0.7 | 0.25 (2.5) |
| 〃 2 | — | — | — | — | — | — | — | — | — | — | 〃 〃 | 〃 〃 |
| 〃 3 | — | — | — | — | — | — | — | — | — | — | 〃 〃 | 0.29 (3.0) |

*Al-i-$Bu_3$×Ti=2.25×0.015 mmol/l Solvent: hexane, 1 liter Polymerization time: 2 hours (to be continued)

TABLE II (continued)

| No. | Copolymerization conditions* | | | Results of copolymerization | | | | |
|---|---|---|---|---|---|---|---|---|
| | | α-olefin | | Copolymer powder | | | | Amount of dissolved polymer (wt.%) |
| | Polymerization temp. (°C) | Type | Amount (mol%) | Yield (g) | Bulk density (g/ml) | MI dg/min | Density (g/cm$^3$) | |
| Ex. 12 | 70 | 1-butene | 3.08 | 317 | 0.37 | 1.5 | 0.939 | 0.1 |
| Ex. 13 | " | " | 4.34 | 337 | 0.39 | 2.8 | 0.937 | 0.5 |
| Ex. 14 | " | " | 3.89 | 365 | 0.35 | 1.0 | 0.933 | 1.0 |
| Ex. 15 | " | " | 6.96 | 302 | 0.36 | 5.5 | 0.928 | 6.8 |
| Ex. 16 | " | " | 5.89 | 269 | 0.40 | 3.9 | 0.932 | 2.0 |
| Ex. 17 | 60 | " | 5.38 | 264 | 0.39 | 1.5 | 0.935 | 3.2 |
| Ex. 18 | " | " | 5.42 | 251 | 0.39 | 0.8 | 0.933 | 2.9 |
| Comp. Ex. 1 | 70 | " | 8.53 | 230 | 0.31 | 1.6 | 0.930 | 5.5 |
| " 2 | " | " | 4.19 | 126 | 0.40 | 1.0 | 0.935 | 2.2 |
| " 3 | 65 | " | 7.44 | 320 | 0.35 | 1.4 | 0.928 | 9.4 |

Example 19

Preparation of the Ti catalyst component [A]:

[Synthesis of spherical $MgCl_2 \cdot nEtOH$]:

A 3-liter capacity autoclave was charged with 1.5 liters of refined kerosene, 112.5 g of commercially available $MgCl_2$, 163 g of ethanol and 5 g of Emasol 320, after its atmosphere had been thoroughly $N_2$-substituted. The temperature of the system was raised under stirring, and at 125°C the system was stirred at 600 rpm for 20 minutes. The inside pressure of the system was adjusted to 0.98 MPa (10 kg/cm$^2$) (G) with $N_2$. Then the cock on the SUS stainless steel tube having an inner diameter of 3 mm which had been directly connected to the autoclave and maintained at 125°C was opened, so as to transfer the content of the autoclave into a 5 liter-capacity glass flask (equipped with a stirrer) charged in advance with 3 liters of refined kerosene which had been cooled to −15°C. The amount of the transferred liquid was 1 liter, and the time required for the operation was approximately 20 seconds. The formed solid was recovered by decantation and thoroughly washed with hexane to provide the intended carrier. A microscopic observation of the solid revealed that the product was truly spherical.

[Preparation of the Ti composition (a)]:

A 300 ml-glass flask was charged with 150 ml of $TiCl_4$, and then with 7.5 g of the solid obtained above as suspended in 15 ml of refined kerosene, at 20°C under stirring, followed by further addition of 1.83 ml of ethyl benzoate. The temperature of the system was raised to 100°C., and the system was stirred at said temperature for 2 hours. Removing the supernatant portion by decantation, further 150 ml of $TiCl_4$ was added to the system, followed by stirring for 2 hours at 110°C. The solid was recovered by hot-filtration and washed thoroughly with hot kerosene and hexane, to provide a Ti composition (a). The composition contained, calculated as atom, 4.4% by weight of Ti, 59.0% by weight of Cl, 19.0% by weight of Mg, 13.0% by weight of ethyl benzoate and 0.9% by weight of ethoxy group. Its shape was spherical, having a specific surface area of 207 m$^2$/g. The average particle diameter was 13 µm, and the uniformity coefficient was 2.75.

The X-ray diffraction analysis thereof revealed that the maximum peaks of $MgCl_2$ were all very broad [the half breadth of (110) plane; 2.5°).

[Treatment of Ti composition (a) with an organoaluminum compound]:

Into a suspension of 0.75 mg-atom of the above Ti composition, calculated as Ti atom, in 50 ml of n-decane, 2.25 mmols of triethylaluminum was added at 20°C, and the suspension was stirred for 2 hours. Then the solid portion thereof was separated by decantation and washed thoroughly with n-decane.

[Polymerization]:

A 5-liter autoclave equipped with a stirrer was thoroughly $N_2$-substituted, and into which 100 g of a thoroughly refined polyethylene powder having a bulk density of 0.37 g/ml, a density of 0.920 g/cm$^3$ and an MI of 25 dg/min, and subsequently 5 mmols of triisobutylaluminum and 0.02 mg-atom, calculated as Ti atom, of the above Ti-containing catalyst component [A], were added. In the following vapor phase polymerization, the feed rates of ethylene/4-methylpentene-1/hydrogen composition were 600 Nl/hr./400 ml/hr./200 Nl/hr., the pressure was 0.69 MPa (7 kg/cm$^2$) G, and the temperature was 70°C. The copolymerization was performed for 2 hours.

Thus 368 g of a powdery copolymer having a bulk density of 0.37 g/ml, a density of 0.920 g/cm$^3$ and an MI of 24 dg/min was obtained.

**Claims**

1. A process for preparing ethylene copolymers by copolymerizing a predominant amount of ethylene with a minor amount of an α-olefin containing at least three carbon atoms in the presence of a catalyst composed of [A] a titanium-containing catalyst component and [B] an organoaluminum compound catalyst component, characterised in that there is used as component [A] a non-prepolymerization treated titanium-containing catalyst component obtained by treating a solid titanium composition (a) containing at least magnesium, titanium and halogen and optionally containing less than 2 mols of an electron donor per gram-atom of the titanium, with 0.1 to 10 mols of an organoaluminum compound (b) per gram-atom of titanium in said composition (a), the halogen/aluminum (atomic ratio) in said compound (b) being not more than 1/1.

2. A process according to claim 1, wherein the halogen/titanium (atomic ratio) in the solid titanium composition (a) is 5/1 to 200/1, and the magnesium/titanium (atomic ratio) in said composition (a) is 2/1 to 100/1.

3. A process according to claim 1 or 2, wherein the solid titanium composition (a) contains from 0.1 mol to less than 2 mols of an electron donor per gram-atom of titanium.

4. A process according to claim 1, 2 or 3 wherein the halogen/aluminum (atomic ratio) in the organoaluminum compound (b) is not more than 0.5/1.

5. A process according to any one of the preceding claims, wherein the amount of the titanium-containing catalyst component [A] is from 0.001 to 1 millimol as titanium atom, per liter of the reaction

volume, and that of the organoaluminum compound-containing catalyst component [B] is at least 11/1 as expressed by aluminum/titanium (atomic ratio) in the reaction system.

6. A process according to any one of the preceding claims, wherein the copolymerization temperature is from 50° to 120°C, and the pressure is from atmospheric pressure to 9.8 MPa (100 kg/cm$^2$) gauge.

7. A process according to any one of the preceding claims, wherein the ethylene content of said copolymer is at least 88% by mole.

8. A process according to any one of the preceding claims, wherein the α-olefin is a $C_3$ to $C_{15}$ olefin.

9. A process according to any one of the preceding claims, wherein the copolymer is an ethylene copolymer having a density of not higher than 0.945 g/cm$^3$.

10. A process according to any one of the preceding claims, wherein the electron donor is selected from alcohols of $C_1$—$C_{18}$, phenols of $C_6$—$C_{25}$ which may be alkyl-substituted, ketones of $C_3$—$C_{15}$, aldehydes of $C_2$—$C_{15}$, organic acid esters of $C_2$—$C_{20}$, inorganic acid esters, acid halides of $C_2$—$C_{15}$, ethers of $C_2$—$C_{20}$, acid amides of $C_2$—$C_{15}$, amines of $C_1$—$C_{25}$ and nitriles of $C_2$—$C_{10}$.

**Patentansprüche**

1. Verfahren zur Herstellung von Ethylencopolymeren durch Copolymerisieren einer überwiegenden Menge Ethylen mit einer kleinen Menge eines α-Olefins, das mindestens 3 Kohlenstoffatome enthält, in Gegenwart eines Katalysators zusammengesetzt aus [A] einer Titan-enthaltenden Katalysatorkomponente und [B] einer Organoaluminiumverbindung als Katalysatorkomponente, dadurch gekennzeichnet, daß man als Komponente [A] eine nicht durch Prepolymerisation behandelte Titan-enthaltende Katalysatorkomponente verwendet, die erhalten worden ist durch Behandeln einer festen Titanverbindung (a), die mindestens Magnesium, Titan und Halogen sowie gegebenenfalls weniger als 2 mol eines Elektronendonors je gAtom Titan enthält, mit 0,1 bis 10 mol einer Organoaluminiumverbindung (b) je gAtom Titan in der Verbindung (a), wobei das Halogen/Aluminium (Atomverhältnis) in der Verbindung (b) nicht mehr als 1/1 beträgt.

2. Verfahren nach Anspruch 1, bei dem das Halogen/Titan (Atomverhältnis) in der festen Titanverbindung (a) 5/1 bis 200/1 und das Magnesium/Titan (Atomverhältnis) in der Verbindung (a) 2/1 bis 100/1 beträgt.

3. Verfahren nach Anspruch 1 oder 2, bei dem die feste Titanverbindung (a) 0,1 mol bis weniger als 2 mol eines Elektronendonors je gAtom Titan enthält.

4. Verfahren nach Anspruch 1, 2 oder 3, bei dem das Halogen/Aluminium (Atomverhältnis) in der Organoaluminiumverbindung (b) nicht mehr als 0,5/1 beträgt.

5. Verfahren nach einem der vorangehenden Ansprüche, bei dem die Menge der Titan-enthaltenden Katalysatorkomponente [A] 0,001 bis 1 mmol als Titanatom je Liter Reaktionsvolumen beträgt und die Menge der Organoaluminiumverbindung enthaltenden Katalysatorkomponente [B] mindestens 11/1, angegeben als Aluminium/Titan (Atomverhältnis), in dem Reaktionssystem ausmacht.

6. Verfahren nach einem der vorangehenden Ansprüche, bei dem die Copolymerisationstemperatur 50 bis 120°C und der Druck von Atmosphärendruck bis 9,8 MPa (100 kg/cm$^2$) Überdruck beträgt.

7. Verfahren nach einem der vorangehenden Ansprüche, bei dem der Ethylengehalt des Copolymeren mindestens 88 mol-% ausmacht.

8. Verfahren nach einem der vorangehenden Ansprüche, bei dem das α-Olefin ein $C_3$ bis $C_{15}$-Olefin ist.

9. Verfahren nach einem der vorangehenden Ansprüche, bei dem das Copolymer ein Ethylencopolymer mit einer Dichte von nicht mehr als 0,945 g/cm$^3$ ist.

10. Verfahren nach einem der vorangehenden Ansprüche, bei dem der Elektronendonor ausgewählt wird aus $C_1$ bis $C_{18}$ Alkoholen, $C_6$ bis $C_{25}$ Phenolen, die alkylsubstituiert sein können, $C_3$ bis $C_{15}$ Ketonen, $C_2$ bis $C_{15}$ Aldehyden, organischen $C_2$ bis $C_{20}$ Säureestern, anorganischen Säureestern, $C_2$ bis $C_{15}$ Säurehalogeniden, $C_2$ bis $C_{20}$ Ethern, $C_2$ bis $C_{15}$ Säureamiden, $C_1$ bis $C_{25}$ Aminen und $C_2$ bis $C_{10}$ Nitrilen.

**Revendications**

1. Procédé de préparation de copolymères d'éthylène par copolymérisation d'une quantité prédominante d'éthylène avec une quantité peu importante d'une α-oléfine contenant au moins 3 atomes de carbone en présence d'un catalyseur constitué (A) d'un constituant contenant du titane et de (B) d'un composé organoaluminique, caractérisé en ce qu'on utilise à titre de constituant (A) un constituant de catalyseur contenant du titane non traité par prépolymérisation obtenu en traitant une composition au titane solide (a) contenant au moins du magnésium, du titane et de l'halogène et contenant éventuellement moins de 2 moles d'un donneur d'électrons par atome-gramme de titane, avec 0,1 à 10 moles d'un composé organoaluminique (b) par atome-gramme du titane dans ladite composition (a), le rapport halogène/aluminium (rapport atomique) dans ledit composé (b) n'étant pas supérieur à 1/1.

2. Procédé selon la revendication 1, dans lequel le rapport halogène/titane (rapport atomique) dans la composition au titane solide (a) est de 5/1 à 200/1, et le rapport magnésium/titane (rapport atomique) dans ladite composition (a) est de 1/1 à 100/1.

3. Procédé selon la revendication 1 Ou 2, dans lequel la composition au titane solide (a) contient de 0,1 mole à moins de 2 moles d'un donneur d'électrons par atome-gramme de titane.

4. Procédé selon la revendication 1, 2 ou 3, dans lequel le rapport halogène/aluminium (rapport atomique) dans le composé organoaluminique (b) n'est pas supérieur à 0,5/1.

5. Procédé selon l'une quelconque des revendications précédentes, dans lequel la quantité du constituant catalyseur (A) contenant du titane va de 0,001 à 1 millimole en atome de titane, par litre du volume de la réaction, et celle du constituant catalyseur contenant le composé organoaluminique (B) est d'au moins 11/1 exprimé en aluminium/titane (rapport atomique) dans le système de réaction.

6. Procédé selon l'une quelconque des revendications précédentes, dans lequel la température de copolymérisation est comprise dans l'intervalle de 50° à 120°C et la pression va de la pression atmosphérique à la pression manométrique de 9,8 MPa (100 kg/cm$^2$).

7. Procédé selon l'une quelconque des revendications précédentes, dans lequel la teneur en éthylène dudit copolymère est d'au moins 88% en mole.

8. Procédé selon l'une quelconque des revendications précédentes dans lequel l'α-oléfine est une oléfine en $C_3$ à $C_{15}$.

9. Procédé selon l'une quelconque des revendications précédentes, dans lequel le copolymère est un copolymère d'éthylène possédant une densite qui n'est pas supérieure à 0,945 g/cm$^3$.

10. Procédé selon l'une quelconque des revendications précédentes, dans lequel le donneur d'électrons est choisi parmi des alcools en $C_1$—$C_{18}$, des phénols en $C_6$—$C_{25}$ qui peuvent être substitués par des alkyles, des cétones en $C_3$—$C_{15}$, des aldéhydes en $C_2$—$C_{15}$, des esters d'acides organiques en $C_2$—$C_{20}$, des esters d'acides inorganiques, des halogènures d'acide en $C_2$—$C_{15}$, des éthers en $C_2$—$C_{20}$, des amides d'acide en $C_2$—$C_{15}$, des amines en $C_1$—$C_{25}$ et des nitriles en $C_2$—$C_{10}$.